Europäisches Patentamt

European Patent Office

Office européen des brevets

(19)

(11) Numéro de publication: **0 252 825**
**B1**

# (12) FASCICULE DE BREVET EUROPEEN

(45) Date de publication du fascicule du brevet:
20.09.89

(21) Numéro de dépôt: 87401567.0

(22) Date de dépôt: 03.07.87

(51) Int. Cl.⁴: **F16F 9/06**, B64C 25/58

(54) **Amortisseur à adaptation de course résiduelle.**

(30) Priorité: 07.07.86 FR 8609860

(43) Date de publication de la demande:
13.01.88 Bulletin 88/2

(45) Mention de la délivrance du brevet:
20.09.89 Bulletin 89/38

(84) Etats contractants désignés:
DE GB IT

(56) Documents cités:
EP-A- 0 014 660
EP-A- 0 047 209
GB-A- 2 057 629

(73) Titulaire: **MESSIER-HISPANO-BUGATTI, 5 rue Louis Lejeune, F-92120 Montrouge(FR)**

(72) Inventeur: **Veaux, Jacques, 16 boulevard de la Liberté, F-92320 Chatillon(FR)**
Inventeur: **Derrien, Michel, 14 bis rue du Parc de Clagny, F-78000 Versailles(FR)**

(74) Mandataire: **Fruchard, Guy et al, CABINET BOETTCHER 23, rue la Boétie, F-75008 Paris(FR)**

ACTORUM AG

## Description

L'inventioin a pour but un amortisseur du type a deux chambres de fluide compressible formant ressort, notamment pour aéronef, dont la course résiduelle peut être augmentée d'une valeur importante.

Les aéronefs modernes doivent être capables de rouler, décoller et atterrir sur des terrains en mauvais état présentant de fortes bosses ou des ondulations de hauteur non négligeable; un amortisseur utilisé dans de telles conditions doit permettre le franchissement de tels obstacles avec des efforts réduits et sans risque de talonner.

On rappellera en liminaire, qu'un amortisseur de conception classique a deux fonctions internes, une fonction de suspension élastique réalisée par la compression d'un volume d'air, et une fonction d'absorption d'énergie réalisée par le passage forcé à travers d'orifice de laminage d'un fluide incompressible; dans la suite de la description, le terme amortisseur fera appel seulement à la fonction élastique.

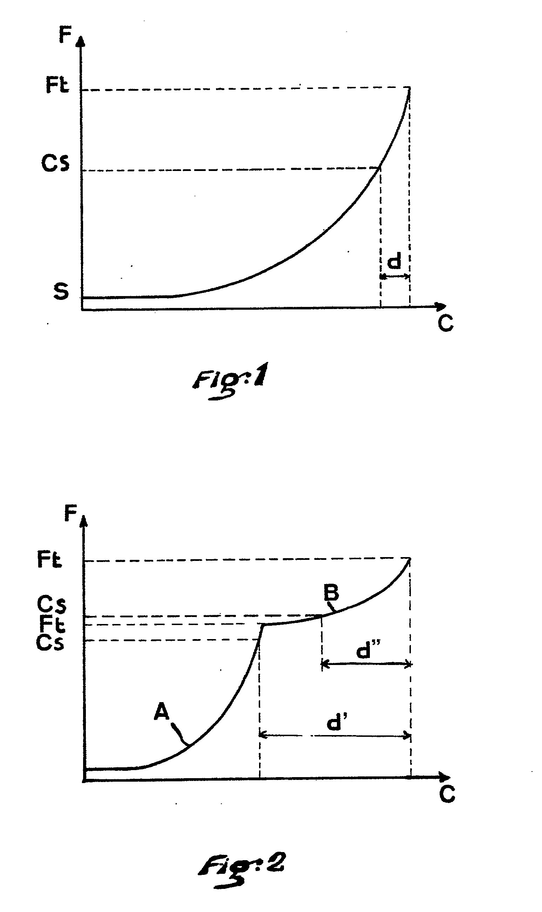

On connait un amortisseur du type à une chambre d'air compressible ayant une fonction élastique tel que représentée sur la figure 1 donnant les variations de la course C d'enfoncement de l'amortisseur en fonction de la force F qui lui est appliquée; l'effort correspondant à la charge statique moyenne Cs de l'aéronef est positionné dans la partie de forte pente (raideur élevé) pour assurer une stabilité convenable de l'aéronef. De plus, pour éviter le rebond de l'aéronef lors de l'atterrissage, l'amortisseur doit avoir un seuil S bas.

Il apparaît donc une faible réserve de course résiduelle d entre l'effort sous charge statique moyenne Cs et l'effort Ft correspondant à l'enfoncement total de l'amortisseur.

On connait également, notamment d'après le document EP-A 47 209, des amortisseurs à deux chambres d'air compressible, appelés généralement "bichambre" ayant une fonction élastique telle que représentée sur la figure 2 et révélant les caractéristiques du préambule de la revendication 1. Quand l'amortisseur subit un effort il se produit en premier la compression du volume d'air dit à basse pression (courbe A) jusqu'à un certain seuil de pression Fe, puis ensuite à partir de ce seuil, c'est le volume d'air dit à haute pression (courbe B) qui est comprimé. La charge statique moyenne Cs est positionnée soit sur la partie raide de la courbe A pour les raisons déjà citées permettant ainsi d'obtenir pour un même effort de charge, une réserve de course d'augmentée par rapport à un amortisseur à une chambre, ou soit sur la partie de faible pente de la courbe B pour réduire les efforts et donner une réserve de course d". Toutefois, cette réserve de course se révèle insuffisante, notamment dans ce dernier cas, pour franchir des obstacles à grande vitesse et de grandes dimensions.

Le but principal de l'invention est donc de parvenir à un amortisseur ayant une fonction élastique adaptée pour franchir des obstacles de grandes dimensions tout en minimisant les efforts engendrés par le passage de tels obstacles. Un autre but de l'invention est de réaliser aussi un amortisseur ayant un faible seuil et une raideur élevée en fin de course d'enfoncement pour obtenir une bonne stabilité.

Pour aboutir à ces buts, un mode préféré de réalisation de l'invention comme définie dans la revendication 1 et une variante ont chacun deux configurations de fonctionnement: le mode préféré à une configuration mono-chambre pour passer à une configuration bi-chambre, la variante passant d'une configuration bi-chambre à une autre configuration bi-chambre.

Plus particulièrement, la présente invention a pour objet un amortisseur comprenant une tige coulissant dans un cylindre par l'intermédiaire d'un piston pour déterminer au moins deux chambres à volume variable, des moyens pour mettre en communication les deux chambres, une des deux chambres comprenant des premiers moyens élastiques à une première pression déterminée en fonction de la charge appliquée à l'amortisseur, l'autre chambre comprenant des seconds moyens élastiques à une deuxième pression déterminée en fonction de la charge appliquée à l'amortisseur et des moyens pour déplacer les seconds moyens élastiques caractérisé en ce que les seconds moyens élastiques sont compris dans une des deux chambres entre un fond mobile et un piston de réhaussement coulissant tous les deux de façon étanche sur la paroi interne du cylindre, le fond mobile et le piston de réhaussement étant entretoisés unidirectionnellement par une tige avec une butée, cette dernière limitant l'éloignement relatif entre le piston de réhaussement et le fond mobile.

D'autres caractéristiques et avantages de la présente invention apparaîtront au cours de la description suivante donnée en regard des dessins annexés à titre illustratif mais nullement limitatif dans lesquels :

- les figures 1 et 2 représentent respectivement une courbe donnant la force à absorber en fonction de la course d'enfoncement pour un amortisseur monochambre et bi-chambre connus, déjà mentionnées précédemment,
- la figure 3 représente une courbe donnant la force à absorber en fonction de la course d'enfoncement pour expliquer le fonctionnement et les avantages d'un amortisseur selon l'invention,
- les figures 4, 5, 6, 7, représentent, sous forme schématique, une coupe longitudinale d'un mode de réalisation d'une amortisseur conforme à l'invention respectivement en position dite "détendue", "sous charge statique", "réhaussé sous charge statique", "réhaussé au passage d'une bosse au roulage",
- la figure 8, représente une variante de l'amortisseur conforme à l'invention,
- la figure 9, représente une courbe donnant la fonction élastique correspondant à une variante de l'amortisseur.

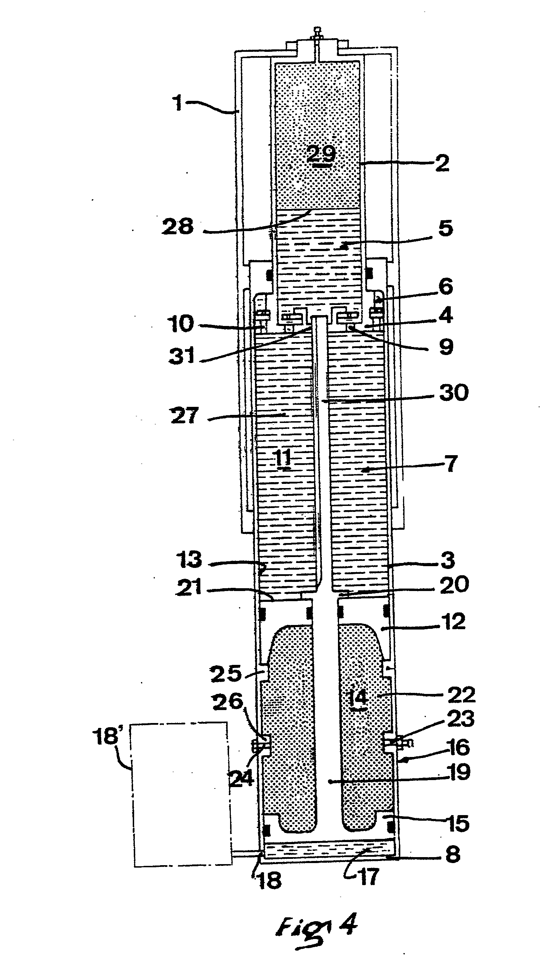

En référence à la figure 4, l'amortisseur selon l'invention comprend un caisson 1 à l'intérieur duquel prend place une tige 2 solidaire dudit caisson et coulissant de façon étanche à l'intérieur d'un cylindre 3 par l'intermédiaire d'un piston 4 ; ce dernier détermine au moins deux chambres, ici trois chambres 5,6,7 : la chambre 5 est définie par l'intérieur de la tige 2 jusqu'au piston 4, la chambre 6 entre la tige 2 et le cylindre 3, et la chambre 7 dans le cylindre 3 à partir du piston 4 jusqu'au fond extrême fixe 8 du cylindre 3. Le piston 4 comprend des moyens de communication 9,10 comme des moyens de laminage pour relier respectivement les chambre 5,7 et 6,7.

La chambre 7 est partagée en trois parties :

- une première partie 11 définit entre le piston 4 et une fond mobile 12 coulissant de façon étanche sur la paroi interne 13 du cylindre 3.
- une deuxième partie 14 délimitée entre le fond mobile 12 et un piston de réhaussement 15 coulissant de façon étanche sur la paroi interne 13 du cylindre 3 dans son extrémité inférieure 16.
- une troisième partie 17 comprise entre le piston de réhaussement 15 et le fond fixe 8 du cylindre 3 pour former une chambre de vérin pouvant être alimentée en fluide incompressible à haute pression par un orifice 18 réalisé dans le fond fixe 8, par une source commandable 18' représentée en trait mixte.

Le fond mobile 12 et le piston de réhaussement 15 sont entretoisés unidirectionnellement par une tige 19 empêchant ces derniers de s'écarter au-delà d'une position définie par une butée 20, réalisée par exemple, par une portion de la tige 19 venant en contact avec la surface extérieure 21 du fond mobile 12.

La deuxième partie 14, entre le fond mobile 12 et le piston de réhaussement 15, contient des seconds moyens élastiques 22 réalisés par un fluide compressible à grand volume dont on expliquera le rôle plus loin en détail et à haute pression, ce qui fait venir le fond mobile 12 en contact avec la butée 20; cette deuxième partie 14 a une valve de gonflage 23 réalisée sur une portion du cylindre 3 et peut être mise en communication par un orifice 24 avec un volume extérieur non représenté compris par exemple dans une bouteille pour augmenter le volume de fluide compressible de cette deuxième partie 14.

Le fond mobile 12 et le piston de réhaussement 15 sont limités en déplacement par au moins un moyen d'arrêt, ici deux butées 25,26 disposées entre le fond mobile et le piston de réhaussement. Ces butées 25,26 sont réalisées par une saillie dans la paroi interne du cylindre 3 et servent respectivement de moyen d'arrêt au fond mobile 12 et au piston de réhaussement 15.

Les chambres 5,6 et la première partie 11 entre le piston 4 et le fond mobile 12 contiennent un fluide incompressible 27 comme de l'huile jusqu'à un niveau par exemple 28 dans la chambre 5, un fluide compressible 29 comme un gaz formant les premiers moyens élastiques étant situés au dessus du niveau 28.

La tige 19 est prolongée par une portion 30 pour constituer une aiguille de laminage comme il est bien connu et qui est apte à traverser le piston 4 par une orifice 31.

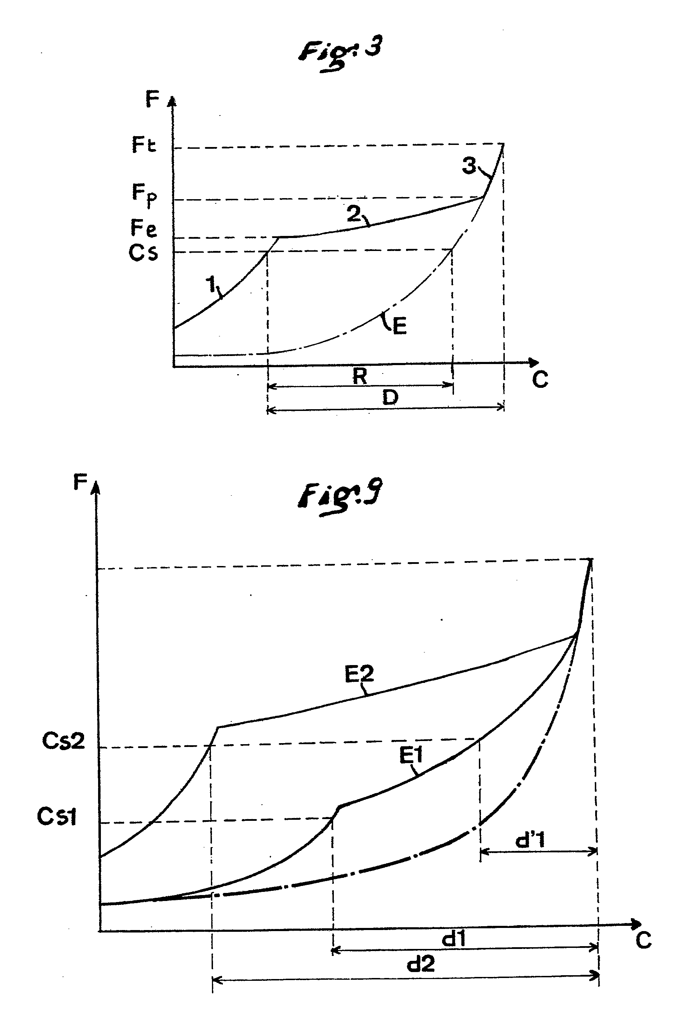

L'amortisseur selon la figure 3 et en conformité avec les figures 4 à 7, fonctionne de la manière suivante.

Il est tout d'abord supposé que les seconds moyens élastiques 22 sont à une pression déterminée, supérieure à la pression des premiers moyens élastiques 29 quand l'amortisseur est en position dite "détendue" (figure 4). Dans cette position le fond mobile 12 est en contact avec la butée 25 et la chambre de vérin 17 est à une pression nulle.

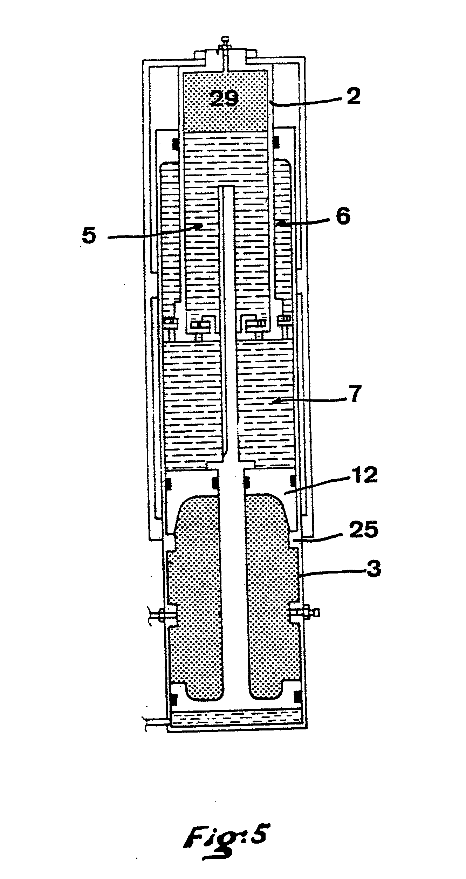

Si la tige 2 s'enfonce sous l'action d'une force dans le cylindre 3 (amortisseur sous une charge statique moyenne Cs - figure 5), les premiers moyens élastiques 29 se compriment, de l'huile passe alors de la chambre 7 vers les chambres 5 et 6; pendant cette opération le fond mobile 12 reste en contact avec la butée 25 et la fonction élastique correspondante est représentée en figure 1 ou en trait mixte E sur la figure 3.

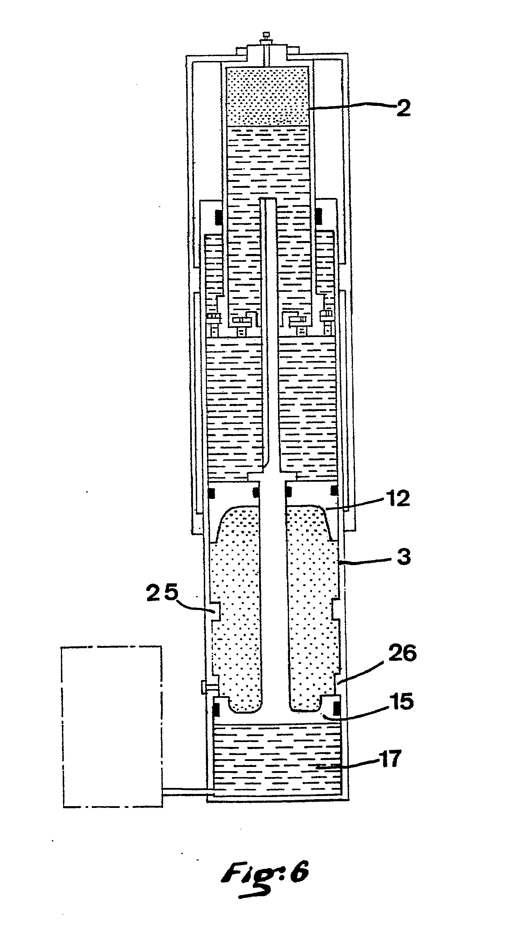

Quand l'aéronef équipé de l'amortisseur conforme à l'invention est amené à décoller sur un terrain en mauvais état, l'aéronef est réhaussé en mettant sous pression la chambre de vérin 17 à l'aide d'un fluide incompressible à haute pression ; le piston de réhaussement 15 et le fond mobile 12 sont déplacés en bloc en translation d'une quantité R définie par la mise en butée du piston de réhaussement sur le moyen d'arrêt 26 (figure 6), ce qui a pour effet une extension du cylindre 3 par rapport à la tige 2. (Le fond mobile 12 n'est plus en contact sur la butée 25).

La fonction élastique telle que représentée en trait mixte E sur la figure 3 est donc décalée d'une valeur R correspondant au réhaussement et devient la courbe 1.

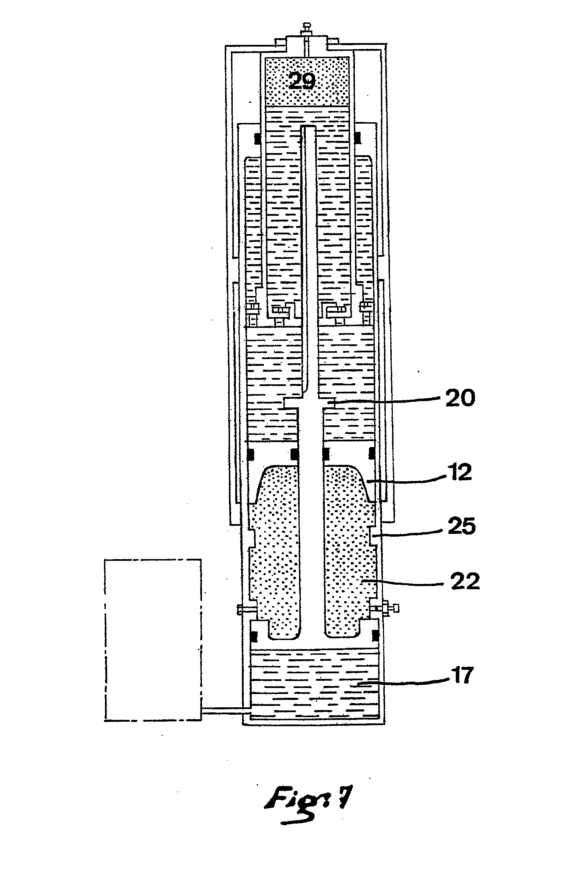

Par ailleurs, la charge statique moyenne Cs a une valeur sensiblement inférieure au seuil d'enfoncement Fe des seconds moyens élastiques 22. Il en résulte que lorsque l'amortisseur est soumis à un effort, dû notamment au passage d'obstacles, supérieur au seuil d'enfoncement Fe des seconds moyens élastiques 22, le fond mobile 12 se déplace et comprime ces seconds moyens élastiques (figure 7) (le fond mobile 12 n'est plus en contact avec la butée 20) ; la fonction élastique correspondante est la courbe 2 figure 3. Ces seconds moyens élastiques à haute pression sont préférentiellement de faible raideur c'est-à-dire de grand volume afin de minimiser les efforts engendrés par le franchissement d'obstacles.

Quand l'effort atteint une valeur Fp déterminée, le fond mobile revient en butée sur le moyen d'arrêt 25 et l'amortisseur fonctionne suivant la compression des premiers moyens élastiques 29 ; la fonction élastique pendant cette phase est la courbe 3 correspondant à la compression des premiers moyens élastiques 22 représentés en trait mixte E sur la figure 3 ; la course résiduelle D de l'amortisseur est donc notablement augmentée.

L'amortisseur conforme à l'invention a une fonction élastique caractérisée par trois zones correspondant à :

- la courbe 1 à pente raide obtenue par la seule compression des premiers moyens élastiques,
- la courbe 2 à grande course et pente très faible pour absorber des grandes bosses et avoir un effort réduit, obtenue surtout par la compression des seconds moyens élastiques ayant un seuil d'enfoncement Fe sensiblement supérieur à la charge statique moyenne Cs,

- la coube 3 à pente raide obtenue par la seule compression des premiers moyens élastiques.

Cette forme de courbe très caractéristique permet de résoudre l'antagoniste entre la stabilité de l'aéronef au roulage au sol et la souplesse de la suspension ; en effet, les zones correspondant aux courbes 1 et 3 à forte pente assurent la stabilité, alors que la zone correspondant à la course 2 à faible pente confère la souplesse.

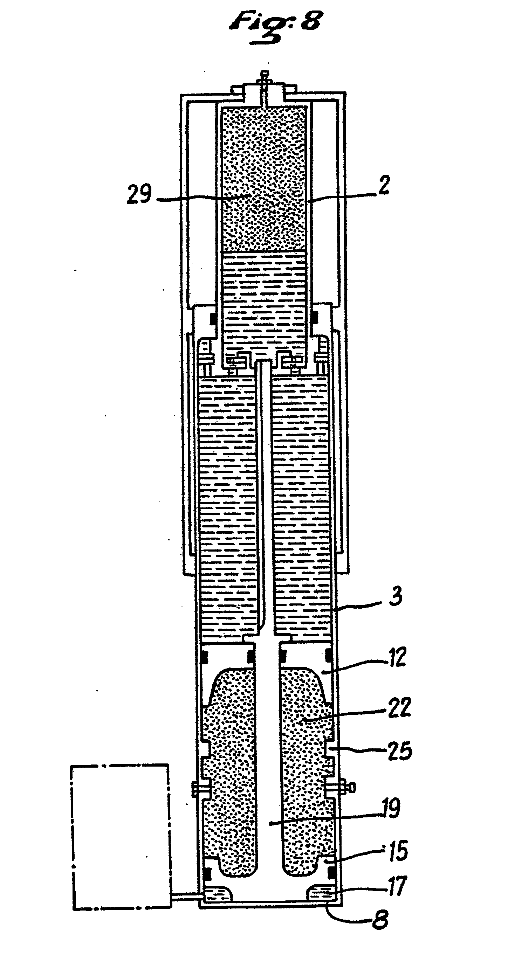

La figure 8 est une variante de l'amortisseur décrit ci-dessus permettant de le faire passer d'une configuration bi-chambre à une autre configuration bi-chambre ; selon cette variante, l'amortisseur est adapté en fonction de la charge qui lui est appliqué.

En effet, en position détendue de l'amortisseur, le piston de réhaussement 15 est en contact sur le fond extrême 8 du cylindre 3 et le fond mobile 12 n'est plus en butée sur le moyen d'arrêt 25. Par conséquent, quand l'aéronef est sous charge statique, les premiers moyens élastiques 29 sont comprimés ; lorsque la pression des premiers moyens élastiques 29 atteint le seuil d'enfoncement Fe des seconds moyens élastiques 22, le fond mobile 12 se déplace et comprime les seconds moyens élastiques 22.

Quand l'effort dans l'amortisseur devient important le fond mobile 12 vient en butée sur le moyen d'arrêt 25, et seul les premiers moyens élastiques 29 sont à nouveau comprimés ; la fonction élastique de cette variante correspondant à une configuration bi-chambre est donc une courbe E1 à trois zones comme représentée sur la figure 9.

Pour une charge statique moyenne CS1 placée sur la pente raide de la première zone de la courbe E1, la réserve de course correspondante est d1. Toutefois, si la charge statique moyenne devient plus élevée pour atteindre une valeur CS2, notamment lors du décollage d'un aéronef, la réserve de course correspondante d'1 se révèle insuffisante pour absorber des bosses élevées. Cependant, en déplaçant les seconds moyens élastiques 22 comme il a déjà été expliqué en alimentant la chambre de vérin 17 par un fluide incompressible, l'amortisseur passe à une autre configuration bi-chambre telle que représenté par la courbe E2 ; la réserve de course d2 augmentée permet d'absorber des bosses très élevées.Il est à remarquer que l'amortisseur peut être utilisé soit dans une position telle que représéntée sur les figures 4 à 8, c'est-à-dire avec les premiers moyens élastiques disposés dans la partie supérieure de l'amortisseur et les seconds moyens élastiques dans la partie inférieure ou, soit dans une position retournée. Cette dernière disposition impose d'interposer un piston séparateur entre les premiers moyens élastiques 29 et le fluide incompressible 27 et facilite notamment la mise en place de la source commandable alimentant la chambre de vérin 17 qui prend place alors à la partie supérieure de l'amortisseur.

## Revendications

1. Amortisseur à adaptation de course résiduelle comprenant une tige (2) coulissant dans un cylindre (3) par l'intermédiaire d'un piston (4) pour déterminer au moins deux chambres (5, 7) à volume variable, des moyens (9, 10) pour mettre en communication les deux chambres, une des deux chambres comprenant des premiers moyens élastiques (29) à une première pression déterminée en fonction de la charge appliquée à l'amortisseur, l'autre chambre comprenant des seconds moyens élasatiques (22) à une deuxième pression déterminée en fonction de la charge appliquée à l'amortisseur et des moyens de déplacement (17) pour déplacer en translation les seconds moyens élastiques caractérisé en ce que les seconds moyen élastiques (22) sont compris dans une des deux chambres entre un fond mobile (12) et un piston de réhaussement (15) coulissant tous les deux de façon étanche sur la paroi interne (13) du cylindre (3), le fond mobile (12) et le piston de réhaussement (15) étant entretoisés unidirectionnellement par une tige (19) avec une butée (20), cette dernière limitant l'éloignement relatif entre le piston de réhaussement (15) et le fond mobile (12).

2. Amortisseur selon la revendication 1 caractérisé en ce qu'au moins un moyen d'arrêt (25, 26) réalisé par une portion de la paroi interne (13) est disposé entre le fond mobile (12) et le piston de réhaussement (15).

3. Amortisseur selon la revendication 1 caractérisé en ce que les moyens de déplacement (17) comprennent une chambre de vérin dont une paroi est constituée par le piston de réhaussement (15), cette chambre de vérin étant reliée à une source de fluide incompressible commandable (18').

## Patentansprüche

1. Dämpfer mit einstellbarem Resthub, mit einer in einem Zylinder (3) unter Zwischenschaltung eines Kolbens (4) verschiebbaren Stange (2) zur Bildung mindestens zweier Kammern (5, 7) mit veränderlichem Volumen, mit Einrichtungen (9, 10), um die beiden Kammern in Verbindung miteinander zu bringen, wobei eine der Kammern eine erste elastische Einrichtung (29) aufweist, die als Funktion der am Dämpfer wirksamen Belastung unter einem ersten vorgegebenen Druck steht, und die andere Kammer eine zweite elastische Einrichtung (22) aufweist, die als Funktion der am Dämpfer wirkenden Belastung unter einem zweiten vorgegebenen Druck steht, und mit einer Verdrängungseinrichtung (17), um die zweite elastische Einrichtung in einer translatorischen Bewegung zu verdrängen, dadurch gekennzeichnet, dass die zweite elastische Einrichtung (22) in einer der beiden Kammern zwischen einem beweglichen Boden (12) und einem Aufstiegskolben (15) enthalten ist, die beide dichtend auf der Innenwand (13) des Zylinders (3) gleiten, der bewegliche Boden (12) und der Aufstiegskolben (15) durch eine Stange (19) mit einem Anschlag (20) in einem einseitigen Abstand voneinander gehalten werden und der Anschlag die relative Entfernung zwischen dem Aufstiegskolben (15) und dem beweglichen Boden (12) begrenzt.

2. Dämpfer nach Anspruch 1, dadurch gekennzeichnet, dass mindestens eine Haltevorrichtung (25, 26), die durch einen Anschnitt der Innenwand (13) gebildet wird, zwischen dem beweglichen Boden (12) und dem Aufstiegskolben (15) liegt.

3. Dämpfer nach Anspruch 1, dadurch gekennzeichnet, dass die Verdrängungseinrichtung (17) eine Hubkammer umfasst, deren eine Wand durch den Aufstiegskolbem (15) gebildet wird, und diese Hubkammer an eine steuerbare Quelle eines inkompressiblen Fluids (18') angeschlossen ist.

## Claims

1. A shock absorber with adjustable residual stroke, the shock absorber comprising a rod (2) slidable in a cylinder (3) via a piston (4) for determining at least two variable volume chambers (5, 7), means (9, 10) for putting said chambers into communication with one another, one of the two chambers including first resilient means (29) at a first pressure which is determined as a function of the load applied to the shock absorber, the other chamber including second resilient means (22) at a second pressure determined as a function of the load applied to the shock absorber, and displacement means (17) for displacing said second resilient means in translation, the shock absorber being characterized in that the second resilient means (22) are located in one of the two chambers between a moving end plate (12) and a raising piston (15) both of which slide in sealed manner against the inside wall (13) of the cylinder (3), the moving end plate (12) and the raising piston (15) being coupled uni-directionally by a rod (19) having an abutment (20), said abutment limiting the relative separation between the raising piston (15) and the moving end plate (12).

2. A scock absorber according to claim 1, characterized in that at least one stop means (25, 26) constituted by a portion of the inside wall (13) is disposed between the moving end plate (12) and the raising piston (15).

3. A shock absorber according to claim 1, characaterized in that the displacement means (17) comprise an actuator chamber having one wall constituted by the raising piston (15), said actuator chamber being connected to a controllable source of incompressible fluid (18').

Fig:1

Fig:2

Fig. 3

Fig. 9

Fig. 4

Fig:5

Fig. 6

*Fig. 7*

Fig. 8